# EUROPÄISCHE PATENTANMELDUNG

(11) **EP 3 832 171 A1**
(43) Veröffentlichungstag der Anmeldung: **09.06.2021**
(21) Anmeldenummer: 19213598.6
(22) Anmeldetag: 04.12.2019
(51) Int. Cl.: F16H 57/08, F16H 1/28

(54) **VERFAHREN ZUR HERSTELLUNG EINES VERBUNDS AUS EINEM SONNENRAD UND EINEM PLANETENTRÄGER SOWIE VERBUND HERGESTELLT NACH DIESEM VERFAHREN**

(71) Anmelder: Maxon International AG, 6072 Sachseln (CH)
(72) Erfinder: Frey, Dominik, 79350 Sexau (DE)
(74) Vertreter: Grünecker Patent- und Rechtsanwälte PartG mbB

(57) **Zusammenfassung**

Die vorliegende Erfindung betrifft ein Verfahren zur Herstellung eines für ein Planetengetriebe vorgesehenen Verbunds aus einem Sonnenrad und einem Planetenträger, wobei Sonnenrad und Planetenträger als separate Bauteile gefertigt und anschließend miteinander gefügt werden. Erfindungsgemäß ist vorgesehen, dass die beiden Bauteile miteinander gefügt werden, indem mittels Umformung eine formschlüssige Verbindung zwischen den beiden Bauteilen hergestellt wird.

## Beschreibung

Die vorliegende Erfindung betrifft ein Verfahren zur Herstellung eines für ein Planetengetriebe vorgesehenen Verbunds aus einem Sonnenrad und einem Planetenträger nach dem Oberbegriff des unabhängigen Anspruchs 1. Bei dem gattungsgemäßen Verfahren werden Sonnenrad und Planetenträger als separate Bauteile gefertigt und anschließend miteinander gefügt.

Bei mehrstufigen Planetengetrieben bildet der Planetenträger der ersten Stufe gleichzeitig den Antrieb für die zweite Stufe des Planetengetriebes. Das Sonnenrad der zweiten Stufe ist daher drehfest mit dem Planetenträger der ersten Stufe verbunden. Aus dem Stand der Technik ist es bekannt, Sonnenrad und Planetenträger als separate Bauteile zu fertigen und mittels stoffschlüssiger Fügeverfahren wie Schweißen, Löten oder Kleben miteinander zu verbinden. Aus dem Stand der Technik ist es auch bekannt, alternativ einen Presssitz zwischen den beiden Bauteilen herzustellen.

Die bekannten stoffschlüssigen Fügeverfahren haben den Nachteil, dass die Materialwahl eingeschränkt ist, da sich viele Materialien nur bedingt stoffschlüssig miteinander verbinden lassen. Zudem eignen sich viele Materialpaarungen nicht oder nur bedingt für einen Presssitz.

Aufgabe der vorliegenden Erfindung ist es, ein Verfahren zur Herstellung eines für ein Planetengetriebe vorgesehenen Verbunds aus einem Sonnenrad und einem Planetenträger nach dem Oberbegriff des unabhängigen Anspruchs 1 anzugeben, welches eine einfache und kostengünstige Herstellung des Verbunds gewährleistet, wobei gleichzeitig eine auf das jeweilige Bauteil zugeschnittene optimierte Materialwahl möglich sein soll.

Die Aufgabe wird gelöst durch die Merkmale des unabhängigen Anspruchs 1. Demnach liegt bei einem Verfahren gemäß dem Oberbegriff des unabhängigen Anspruchs 1 dann eine erfindungsgemäße Lösung der Aufgabe vor, wenn die beiden Bauteile miteinander gefügt werden, indem mittels Umformung eine formschlüssige Verbindung zwischen den beiden Bauteilen hergestellt wird.

Die Erfindung erlaubt eine einfache, kostengünstige und schnelle Herstellung der Verbindung zwischen den beiden Bauteilen. In Bezug auf die Materialwahl besteht eine weitaus größere Flexibilität im Vergleich zu den bekannten Fügeverfahren. Die Erfindung erlaubt unterschiedliche Materialpaarungen, z.B. Metall und Keramik oder Metall und Kunststoff. Das zu verformendes Bauteil, in der Regel ist das der Planetenträger, besteht vorzugsweise aus Metall. Das nicht zu verformende Bauteil kann ebenfalls aus Metall, oder aber beispielsweise aus Kunststoff oder Keramik gefertigt werden.

Vorteilhafte Ausführungsformen der vorliegenden Erfindung sind Gegenstand der Unteransprüche.

Die Umformung kann beispielsweise mittels Rollieren, Walzen, Bördeln, Verstemmen, Prägen, Biegen, Falzen oder Kneten erfolgen.

Gemäß einer besonders bevorzugten Ausführungsform der vorliegenden Erfindung erfolgt die Umformung mittels Rollieren.

Weiter besonders bevorzugt kann zusätzlich zu der formschlüssigen Verbindung eine kraftschlüssige Verbindung zwischen den beiden Bauteilen, vorzugsweise in Form eines Presssitzes, hergestellt werden, um die Verbindung zwischen den Bauteilen zu verbessern bzw. zu verstärken.

Gemäß einer weiteren bevorzugten Ausführungsform der vorliegenden Erfindung ist vorgesehen, dass eines der beiden Bauteile mit einer Lasche gefertigt wird, wobei das andere der beiden Bauteile mit einer Ausnehmung gefertigt wird, und wobei die Lasche des einen Bauteils mittels Umformung zumindest teilweise in die Ausnehmung des anderen Bauteils hinein verformt wird, um die formschlüssige Verbindung zwischen den beiden Bauteilen herzustellen. Dadurch lässt sich die formschlüssige Verbindung äußerst einfach und schnell herstellen.

Besonders bevorzugt ist vorgesehen, dass die Ausnehmung als umlaufende Nut gefertigt wird, wobei das mit der umlaufenden Nut versehene Bauteil in eine Bohrung des anderen Bauteils eingesetzt wird, und wobei die Lasche des anderen Bauteils anschließend zumindest teilweise in die Nut hinein verformt wird. Dadurch wird ein besonders sicherer Formschluss in axialer Richtung bewirkt.

Gemäß einer weiteren besonders bevorzugten Weiterbildung der vorliegenden Erfindung wird der Planetenträger mit der Bohrung gefertigt, wobei das Sonnenrad mit der umlaufenden Nut gefertigt wird, wobei das Sonnenrad einen mit einer Verzahnung versehenen Laufbereich und einen axial außerhalb des Laufbereichs bestehenden und in die Bohrung des Planetenträgers einsetzbaren Schaftbereich aufweist, und wobei die Nut im Schaftbereich ausgebildet wird.

Bei der Nut handelt es sich vorzugsweise um einen Freistich. Die umlaufende Nut kann gemäß einer weiteren Ausführungsform der vorliegenden Erfindung beispielsweise unmittelbar neben dem mit der Verzahnung versehenen Laufbereich des Sonnenrads in dem Schaftbereich des Sonnenrads ausgebildet werden. Alternativ kann vorgesehen sein, dass der Schaftbereich einen geringeren Außendurchmesser aufweist als der Laufbereich, wobei die umlaufende Nut mit Abstand zu dem Laufbereich des Sonnenrads in dem Schaftbereich des Sonnenrads ausgebildet wird, sodass zwischen Nut und Laufbereich ein Absatz entsteht, und wobei die beiden Bauteile derart zusammengesetzt werden, dass sich die Lasche des Planetenträgers bis hin zu dem Absatz erstreckt und den Absatz zumindest teilweise überdeckt. Sowohl der Absatz als auch der auf der anderen Seite der Nut bestehende Abschnitt des Schaftbereichs können eine Restverzahnung aufweisen, in die bei der Umformung jeweils Material der Lasche hineingedrängt werden kann, um den Formschluss zwischen den beiden Bauteilen zu verbessern, sodass insbesondere eine Übertragung hoher Drehmomente ermöglicht wird. Hierbei kann die Lasche in einer beispielhaften Ausführung mittels Dornen punktuell in die Nut und beispielsweise auch zusätzlich in die Restverzahnung hineingedrängt werden, wodurch sowohl ein axialer als auch ein rotativer Formschluss erzeugt wird. Sinngemäß gleich ließen sich dieses auch mit anderen Umformwerkzeugkonturen bewirken. Es lassen sich auch formschlüssige Verbindungen herstellen, wenn das Werkzeug beim Umformen der Lasche sich nicht relativ zu den Bauteilen (Sonnenrad, Planetenträger) bewegt und somit nur partielle Umformungen und keine Umlaufenden hergestellt werden. Zur Erzeugung dieser formschlüssigen Verbindung eignen sich insbesondere auch Umformwerkzeuge, welche nicht relativ zu den Bauteilen drehbar sind. Die Lasche kann auch mit einem Werkzeug umlaufen kontinuierlich in die Nut und/oder die Restverzahnung hineingedrängt werden.

Gemäß einer weiteren besonders bevorzugten Ausführungsform der vorliegenden Erfindung kann vorgesehen sein, dass das Sonnenrad zunächst mit einer in axialer Richtung durchgehend vorhandenen Verzahnung gefertigt wird, wobei die Nut anschließend derart in das Sonnenrad eingebracht wird, dass die Verzahnung an einem Nutgrund der Nut teilweise bestehen bleibt, wobei die Lasche des Planetenträgers derart in die Nut hinein verformt wird, dass ein Formschluss zwischen der Verzahnung am Nutgrund und der Lasche entsteht. Dadurch wird zum einen die Herstellung des Sonnenrads vereinfacht. Zum anderen wird dadurch auch die Verbindung zwischen den beiden Bauteilen verbessert. Die Höhe der Nut ist bei dieser Ausführungsform geringer als die Verzahnungshöhe. Das Material der Lasche wird zumindest teilweise in die Zwischenräume der Verzahnung am Nutgrund gedrängt.

Gemäß einer weiteren bevorzugten Ausführungsform der vorliegenden Erfindung kann vorgesehen sein, dass das Sonnenrad zunächst mit einer in axialer Richtung durchgehend vorhandenen Verzahnung gefertigt wird, wobei die Verzahnung im Schaftbereich zumindest teilweise bestehen bleibt, und wobei die Lasche des Planetenträgers derart verformt wird, dass ein Formschluss zwischen der Verzahnung im Schaftbereich und der Lasche entsteht. Auch bei dieser Ausführungsform wird der Formschluss bzw. die Verbindung zwischen den beiden Bauteilen weiter optimiert.

Gemäß einer weiteren Ausführungsform der vorliegenden Erfindung kann der Schaftbereich mit Mikroformschlusselementen versehen werden. Bei den Mikroformschlusselementen kann es sich beispielsweise um Zacken oder Widerhaken handeln. Diese können zusätzlich zu einer im Schaftbereich bestehenden Verzahnung bzw. Restverzahnung vorgesehen werden. Die Mikroformschlusselemente dringen beim Fügen des Sonnenrads in den Planetenträger in die Wandung der Bohrung ein und sorgen somit für einen zusätzlichen Mikroformschluss. Die Verbindung zwischen den beiden Bauteilen wird dadurch weiter verbessert.

Gemäß einer weiteren bevorzugten Ausführungsform der vorliegenden Erfindung ist die Lasche ein hohlzylindrischer Vorsprung des Planetenträgers, welcher umlaufend in die Nut des Sonnenrads hinein verformt wird. Der hohlzylindrische Vorsprung weist vorzugsweise den gleichen Innendurchmesser auf wie die sich an den Vorsprung anschließende Bohrung des Planetenträgers. Weiter vorzugsweise wird in den hohlzylindrischen Vorsprung dazu eine in Umfangsrichtung verlaufenden Sicke eingebracht, um den Formschluss herzustellen. Die Lasche kann in Umfangsrichtung alternativ nur segmentweise ausgebildet sein. Auch ist es möglich, die Lasche nur segmentweise in die Nut hinein zu verformen. In letzterem Fall können einzelne punktförmige oder in Achsrichtung verlaufende längliche Sicken in die Lasche bzw. in den hohlzylindrischen Vorsprung eingebracht werden.

Gemäß einer weiteren besonders bevorzugten Ausführungsform der vorliegenden Erfindung werden Bohrung und Schaftbereich derart bemessen, dass beim Zusammensetzen der beiden Bauteile eine Presspassung zwischen Bohrung und Schaftbereich entsteht. Dadurch wird eine besonders sichere Verbindung zwischen den beiden Bauteilen erzeugt, wodurch auch die Übertragung besonders hoher Drehmomente ermöglicht wird.

Gemäß einer weiteren Ausführungsform der vorliegenden Erfindung kann vorgesehen sein, dass die Bohrung mit zumindest einer Verjüngung ausgeführt wird, deren minimaler Innendurchmesser geringer ist als der Außendurchmesser des Schaftbereichs des Sonnenrads. Beim Fügen des Sonnenrads kann dabei eine im Schaftbereich bestehende Verzahnung bzw. Restverzahnung in die Verjüngung eingepresst werden, so das durch Materialverdrängung oder Materialabtrag ein negatives Abbild der Kontur des Schaftbereichs entsteht. Dadurch entsteht im Bereich der Verjüngung ein zusätzlicher Formschluss.

Die vorliegende Erfindung stellt auch einen Verbund aus einem Sonnenrad und einem Planetenträger, hergestellt nach dem erfindungsgemäßen Verfahren, bereit.

Ausführungsbeispiele der vorliegenden Erfindung werden im Folgenden anhand von Zeichnungen näher erläutert.

Es zeigen:
- Figur 1:: das Sonnenrad eines erfindungsgemäßen Verbunds gemäß einem ersten Ausführungsbeispiel in einer perspektivischen Ansicht,
- Figur 2:: einen Längsschnitt durch das Sonnenrad aus Figur 1 und einen zugehörigen Planetenträger vor dem Zusammensetzen der beiden Bauteile,
- Figur 3:: die Darstellung aus Figur 2 nach dem Zusammensetzen der beiden Bauteile,
- Figur 4:: die zusammengesetzten Bauteile aus Figur 3 mit Darstellung des abschließenden Umformschritts durch eine Rollierwalze,
- Figur 5:: das Sonnenrad eines erfindungsgemäßen Verbunds gemäß einem zweiten Ausführungsbeispiel in einer perspektivischen Ansicht,
- Figur 6:: einen Längsschnitt durch das Sonnenrad aus Figur 5 und einen zugehörigen Planetenträger im zusammengesetzten Zustand und mit Darstellung des abschließenden Umformschritts durch eine Rollierwalze,
- Figur 7:: einen Längsschnitt durch einen für das Sonnenrad aus Figur 5 geeigneten Planetenträger mit zusätzlicher Verjüngung im Bereich der Bohrung gemäß einem dritten Ausführungsbeispiel der vorliegenden Erfindung,
- Figur 8:: einen Längsschnitt durch den Planetenträger aus Figur 7 und ein zugehöriges Sonnenrad im zusammengesetzten und fertig gefügten Zustand, und
- Figur 9:: einen Längsschnitt durch einen Planetenträger gemäß einer Abwandlung des Ausführungsbeispiels aus Figur 7.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

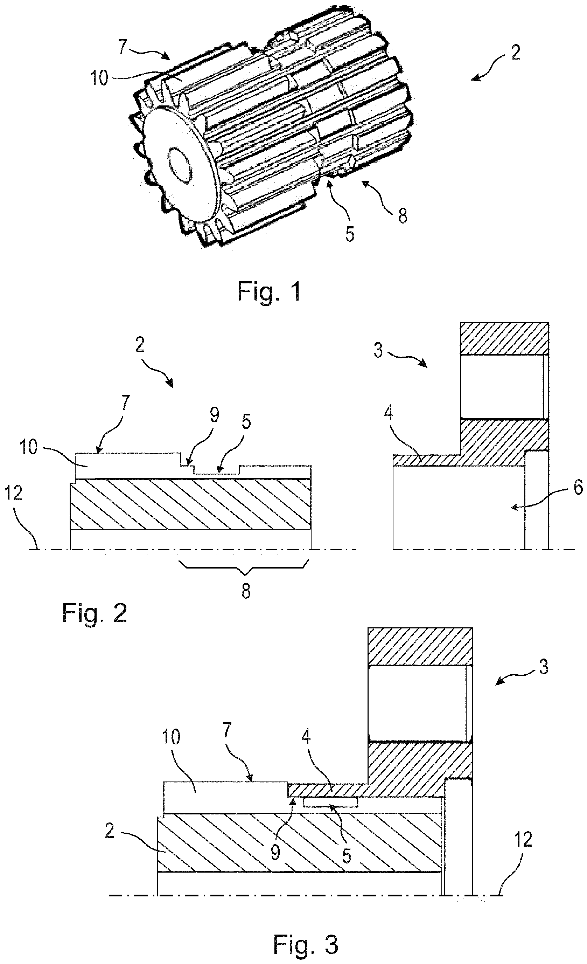

Figur 1 zeigt eine perspektivische Ansicht eines Sonnenrads 2 gemäß einem ersten Ausführungsbeispiel der vorliegenden Erfindung. Das Sonnenrad weist einen sogenannten Laufbereich 7 auf, in welchen eine Verzahnung 10 besteht, mit der das Sonnenrad 2 mit den Planetenrädern einer nächsten Stufe eines Planetengetriebes kämmen kann. An den Laufbereich 7 schließt sich in axialer Richtung ein sogenannter Schaftbereich 8 an. Wie weiter unten noch im Detail erläutert wird, dient der Schaftbereich 8 zur Verbindung mit einem entsprechenden Planetenträger 3, welcher in Figur 2 dargestellt ist. Zur Herstellung des Sonnenrads 2 wird die Verzahnung 10 zunächst über die gesamte Länge des Sonnenrads 2 ausgebildet. Durch Abdrehen des Bauteils werden anschließend der Schaftbereich mit einem im Vergleich zum Ausgangsdurchmesser geringeren Durchmesser sowie die Nut mit einem nochmals verringerten Durchmesser hergestellt. Sowohl im Schaftbereich selbst als auch im Bereich der Nut verbleibt eine gewisse Restverzahnung. Das bedeutet, das Bauteil wird in diesen beiden Bereichen nicht soweit abgedreht, dass die Verzahnung vollständig abgetragen wird, sondern sie bleibt zumindest bis zu einer gewissen Höhe bestehen. Mit anderen Worten verbleibt dort eine gewisse Restverzahnung.

In Figur 2 sind das Sonnenrad 2 und der zugehörige Planetenträgers 3 im nicht zusammengesetzten Zustand dargestellt. Beide Bauteile teilen sich eine Achse 12. In Figur 2 ist auch zu erkennen, dass im Schaftbereich 8 des Sonnenrads 2 eine Nut 5 ausgebildet ist. Die Nut 5 weist einen geringen Abstand zum Laufbereich 7 auf, wodurch zwischen der Nut 5 und dem Laufbereich 7 ein Absatz 9 entsteht.

Der zugehörige Planetenträger 3 weist eine Bohrung 6 auf, in die der Schaftbereich 8 des Sonnenrads 2 eingesteckt oder, sofern eine Presspassung erwünscht ist, eingepresst werden kann. Sozusagen in Verlängerung der Bohrung 6 steht von dem Planetenträger 3 ein hohlzylindrischer Vorsprung 4 ab, der im wesentlichen denselben Innendurchmesser aufweist wie die Bohrung 6 selbst. Wie Figur 3 zeigt, überdeckt der hohlzylindrische Vorsprung 4 im zusammengesetzten Zustand der beiden Bauteile die umlaufende Nut 5 des Sonnenrads 2. Der hohlzylindrische Vorsprung 4 erstreckt sich bis hin zu dem Absatz 9, wobei er auch diesen Absatz 9 überdeckt.

In Figur 3 sind das Sonnenrad 2 und der Planetenträger 3 in einem zusammengesetzten Zustand vor dem abschließenden Umformschritt gezeigt. Der hohlzylindrische Vorsprung 4 des Planetenträgers 3 ist hier auf den Schaftbereich 8 des Sonnenrads 2 aufgesetzt, wobei der hohlzylindrische Vorsprung 4 bis an den Absatz 9 heran reicht und die Nut 5 vollständig überdeckt.

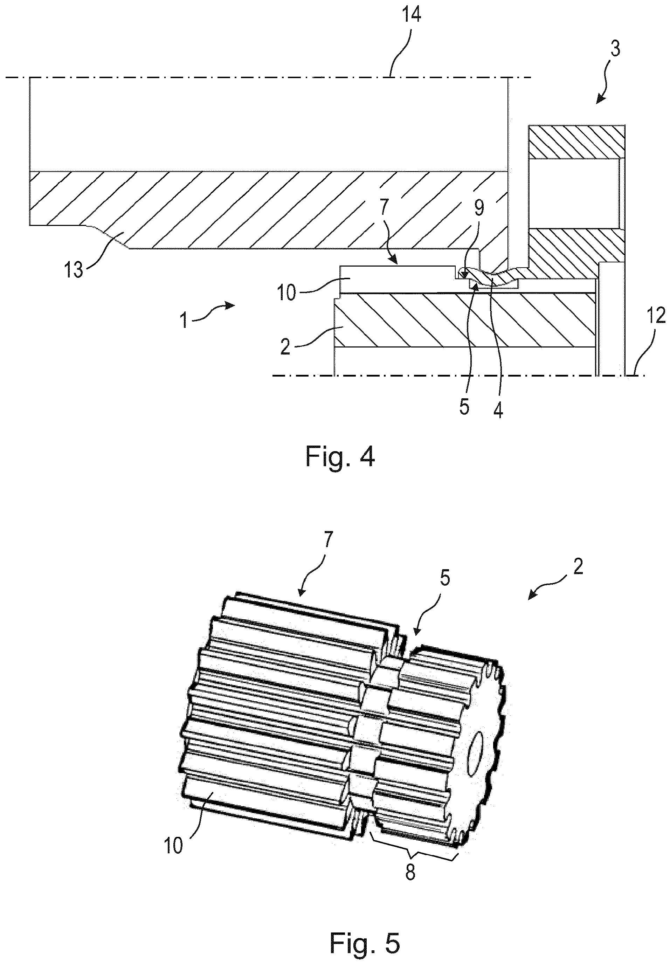

In Figur4 ist der abschließende Umformschritt des erfindungsgemäßen Verfahrens dargestellt. Hierzu wird in den hohlzylindrischen Vorsprung 4 mittels einer Rollierwalze 13, die sich um ihre Achse 14 dreht, eine umlaufende Sicke eingeprägt, wodurch der hohlzylindrische Vorsprung zumindest teilweise in die umlaufende Nut 5 hinein verformt wird. Aufgrund der Restverzahnung am Nutgrund der Nut 5 und im Schaftbereich 8 wird das Material des hohlzylindrischen Vorsprungs teilweise auch in die Zwischenräume zwischen den Zähnen der Restverzahnung gepresst, wodurch ein besonders fester Sitz sowie ein Formschluss entsteht, der nicht nur in axialer Richtung sondern auch in Umfangsrichtung wirkt.

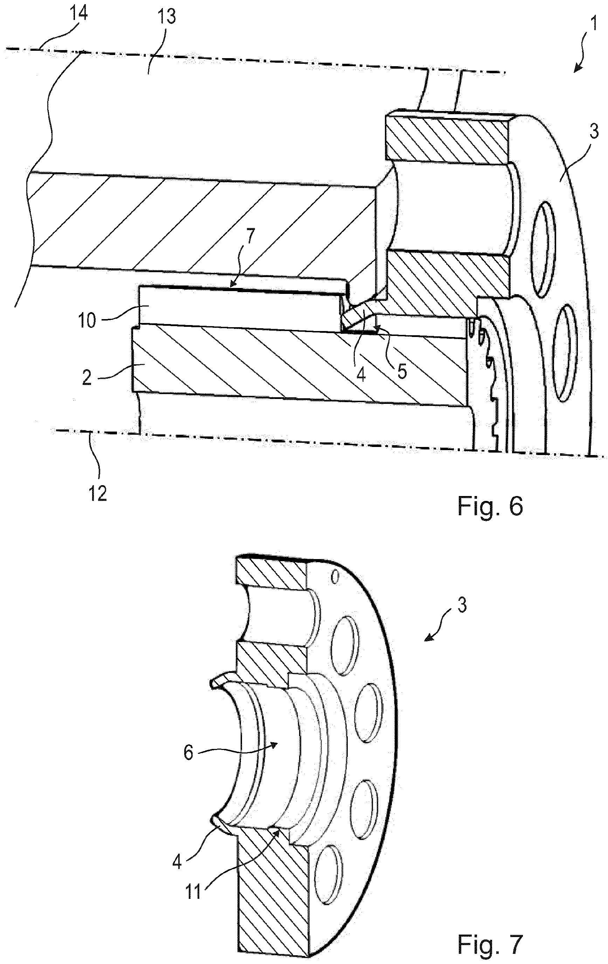

Die Figuren 5 und 6 zeigen ein alternatives Ausführungsbeispiel, bei dem die umlaufende Nut 5 axial unmittelbar an den Laufbereich 7 des Sonnenrads 2 anschließt.

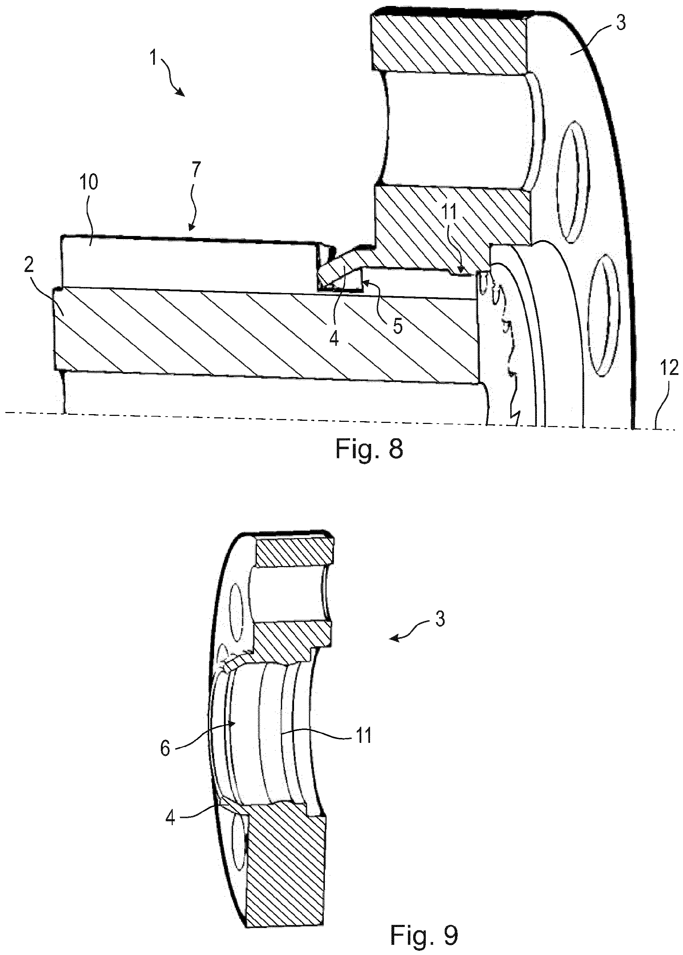

Figur 7 zeigt einen zugehörigen Planetenträger 3, dessen Bohrung 6 eine Verjüngung 11 aufweist, die beim Fügen von Sonnenrad 2 und Planetenträger 3, so wie in Figur 8 dargestellt, für einen zusätzlichen Formschluss im Bereich der Bohrung 6 bzw. des Schaftbereichs 8 sorgt. Es wird darauf hingewiesen, dass der hohlzylindrische Vorsprung 4 in dieser Darstellung bereits im umgeformten Zustand dargestellt ist.

Figur 9 schließlich zeigt eine Abwandlung des Planetenträgers 3 aus Figur 7 mit einer doppelkonischen Verjüngung 11, die das Einpressen des Schaftbereichs 8 des Sonnenrads 2 in die Bohrung 6 erleichtert.

### Bezugszeichenliste

- 1: Verbund
- 2: Sonnenrad
- 3: Planetenträger
- 4: Lasche / hohlzylindrischer Vorsprung
- 5: Ausnehmung / Nut
- 6: Bohrung
- 7: Laufbereich
- 8: Schaftbereich
- 9: Absatz
- 10: Verzahnung
- 11: Verjüngung
- 12: Achse
- 13: Rollierwalze
- 14: Achse der Rollierwalze

## Patentansprüche

1. Verfahren zur Herstellung eines für ein Planetengetriebe vorgesehenen Verbunds (1) aus einem Sonnenrad (2) und einem Planetenträger (3), wobei Sonnenrad (2) und Planetenträger (3) als separate Bauteile gefertigt und anschließend miteinander gefügt werden, **dadurch gekennzeichnet, dass** die beiden Bauteile (2, 3) miteinander gefügt werden, indem mittels Umformung eine formschlüssige Verbindung zwischen den beiden Bauteilen (2, 3) hergestellt wird.

2. Verfahren nach Anspruch 1, **dadurch gekennzeichnet, dass** die Umformung mittels Rollieren erfolgt.

3. Verfahren nach Anspruch 1 oder 2, **dadurch gekennzeichnet, dass** zusätzlich zu der formschlüssigen Verbindung eine kraftschlüssige Verbindung zwischen den beiden Bauteilen (2, 3), vorzugsweise in Form eines Presssitzes, hergestellt wird.

4. Verfahren nach einem der Ansprüche 1 bis 3, **dadurch gekennzeichnet, dass** eines der beiden Bauteile (2, 3) mit einer Lasche (4) gefertigt wird, wobei das andere der beiden Bauteile (2, 3) mit einer Ausnehmung (5) gefertigt wird, und wobei die Lasche (4) des einen Bauteils (2, 3) mittels Umformung zumindest teilweise in die Ausnehmung (5) des anderen Bauteils (2, 3) hinein verformt wird, um die formschlüssige Verbindung zwischen den beiden Bauteilen (2, 3) herzustellen.

5. Verfahren nach Anspruch 4, **dadurch gekennzeichnet, dass** die Ausnehmung (5) als umlaufende Nut gefertigt wird, wobei das mit der umlaufenden Nut (5) versehene Bauteil (2, 3) in eine Bohrung (6) des anderen Bauteils (2, 3) eingesetzt wird, und wobei die Lasche (4) des anderen Bauteils (2, 3) anschließend zumindest teilweise in die Nut (5) hinein verformt wird.

6. Verfahren nach Anspruch 5, **dadurch gekennzeichnet, dass** der Planetenträger (3) mit der Bohrung (6) gefertigt wird, wobei das Sonnenrad (2) mit der umlaufenden Nut (5) gefertigt wird, wobei das Sonnenrad (2) einen mit einer Verzahnung (10) versehenen Laufbereich (7) und einen axial außerhalb des Laufbereichs (7) bestehenden und in die Bohrung (6) des Planetenträgers (3) einsetzbaren Schaftbereich (8) aufweist, und wobei die Nut (5) im Schaftbereich (8) ausgebildet wird.

7. Verfahren nach Anspruch 6, **dadurch gekennzeichnet, dass** die umlaufende Nut (5) unmittelbar neben dem mit der Verzahnung (10) versehenen Laufbereich (7) des Sonnenrads (2) in dem Schaftbereich (8) des Sonnenrads (2) ausgebildet wird.

8. Verfahren nach Anspruch 6, **dadurch gekennzeichnet, dass** der Schaftbereich (8) einen geringeren Außendurchmesser aufweist als der Laufbereich (7), wobei die umlaufende Nut (5) mit Abstand zu dem Laufbereich (7) des Sonnenrads (2) in dem Schaftbereich (8) des Sonnenrads (2) ausgebildet wird, sodass zwischen Nut (5) und Laufbereich (7) ein Absatz (9) entsteht, und wobei die beiden Bauteile (2, 3) derart zusammengesetzt werden, dass sich die Lasche (4) des Planetenträgers (3) bis hin zu dem Absatz (9) erstreckt und den Absatz (9) zumindest teilweise überdeckt.

9. Verfahren nach einem der Ansprüche 5 bis 8, **dadurch gekennzeichnet, dass** das Sonnenrad (2) zunächst mit einer in axialer Richtung durchgehend vorhandenen Verzahnung (10) gefertigt wird, wobei die Nut (5) anschließend derart in das Sonnenrad (2) eingebracht wird, dass die Verzahnung (10) an einem Nutgrund der Nut (5) teilweise bestehen bleibt, wobei die Lasche (4) des Planetenträgers (3) derart in die Nut (5) hinein verformt wird, dass ein Formschluss zwischen der Verzahnung (10) am Nutgrund und der Lasche (4) entsteht.

10. Verfahren nach einem der Ansprüche 5 bis 9, **dadurch gekennzeichnet, dass** das Sonnenrad (2) zunächst mit einer in axialer Richtung durchgehend vorhandenen Verzahnung (10) gefertigt wird, wobei die Verzahnung (10) im Schaftbereich (8) zumindest teilweise bestehen bleibt, und wobei die Lasche (4) des Planetenträgers (3) derart verformt wird, dass ein Formschluss zwischen der Verzahnung (10) im Schaftbereich (8) und der Lasche (4) entsteht.

11. Verfahren nach einem der Ansprüche 5 bis 10, **dadurch gekennzeichnet, dass** der Schaftbereich (8) mit Mikroformschlusselementen versehen wird.

12. Verfahren nach einem der Ansprüche 5 bis 11, **dadurch gekennzeichnet, dass** die Lasche (4) ein hohlzylindrischer Vorsprung des Planetenträgers (3) ist, welcher umlaufend in die Nut (5) des Sonnenrads (2) hinein verformt wird.

13. Verfahren nach einem der Ansprüche 5 bis 12, **dadurch gekennzeichnet, dass** Bohrung (6) und Schaftbereich (8) derart bemessen werden, dass beim Zusammensetzen der beiden Bauteile (2, 3) eine Presspassung zwischen Bohrung (6) und Schaftbereich (8) entsteht.

14. Verfahren nach einem der Ansprüche 5 bis 13, **dadurch gekennzeichnet, dass** die Bohrung (6) mit zumindest einer Verjüngung (11) ausgeführt wird, deren minimaler Innendurchmesser geringer ist als der Außendurchmesser des Schaftbereichs (8) des Sonnenrads (2).

15. Verbund (1) aus einem Sonnenrad (2) und einem Planetenträger (3), hergestellt nach dem Verfahren gemäß einem der vorstehenden Ansprüche.
